# FASCICULE DE BREVET EUROPEEN

(11) **EP 0 929 421 B1**
(45) Date de publication et mention de la délivrance du brevet: **21.05.2003**
(21) Numéro de dépôt: 98941571.6
(22) Date de dépôt: 07.08.1998
(51) Int. Cl.: B60S 1/04

(54) **DISPOSITIF D'ENTRAINEMENT D'UN SYSTEME D'ESSUYAGE D'UNE VITRE, NOTAMMENT POUR VEHICULE AUTOMOBILE**
SCHEIBENWISCHER-ANTRIEBSVORRICHTUNG, INSBESONDERE FÜR KRAFTFAHRZEUG
METHOD FOR DRIVING A WINDSCREEN WIPER SYSTEM, IN PARTICULAR FOR MOTOR VEHICLE

(30) Priorité: 11.08.1997 FR 9710309
(43) Date de publication de la demande: 21.07.1999
(73) Titulaire: VALEO SYSTEMES D'ESSUYAGE, 78321 La Verrière (FR)
(72) Inventeur: GOUGEON, Philippe, F-86550 Mignaloux (FR); GUIBERT, Yannick, F-86100 Chatellerault (FR); JULIEN, Eric, F-86100 Chatellerault (FR); BORDIER, Stéphane, F-86100 Chatellerault (FR)
(74) Mandataire: Lemaire, Marc
(86) Numéro de dépôt international: FR9801773
(87) Numéro de publication internationale: WO99007585

(56) Documents cités:
- EP-A- 0 359 733
- FR-A- 2 667 833
- GB-A- 875 036
- US-A- 1 906 047
- US-A- 3 874 249

## Description

La présente invention concerne un dispositif d'entraînement d'un système d'essuyage d'une vitre, notamment pour véhicule automobile.

L'invention concerne plus particulièrement un dispositif d'entraînement d'un système d'essuyage d'une vitre, du type comportant un ensemble moteur-réducteur dans lequel le moteur agencé dans une carcasse comporte un arbre moteur pour l'entraînement du réducteur et dans lequel le réducteur placé à l'avant du moteur comporte un arbre de sortie destiné à mouvoir une timonerie d'essuyage, et du type comportant une platine de maintien de l'ensemble moteur-réducteur, qui est fixée sur une traverse solidaire de la caisse du véhicule. Un carter de protection du réducteur est fixé sur la platine.

Dans un tel type de dispositif d'entraînement, l'ensemble moteur-réducteur est généralement fixé sur la platine de maintien par l'intermédiaire de vis. Les vis de fixation sont généralement disposées autour de l'arbre de sortie du réducteur et le moteur se trouve donc fixé en quelque sorte en porte-à-faux par rapport à la platine de maintien.

En effet, la carcasse du moteur est fixée, par une extrémité avant, sur le carter du réducteur par tout moyen approprié, et par exemple par vissage ou par sertissage.

L'ensemble moteur-réducteur est donc destiné à entraîner, par l'intermédiaire de la timonerie, des essuie-glace dont le mouvement est un mouvement rotatif alterné. Le caractère alternatif du mouvement peut être obtenu soit en utilisant un moteur électrique dont le mouvement de l'arbre moteur est lui-même alterné, soit en utilisant une timonerie, par exemple à bielle et à manivelles, qui transforme un mouvement rotatif continu de l'arbre moteur et donc de l'arbre d'entraînement du réducteur en un mouvement rotatif alterné des essuie-glace.

Dans tous les cas, le caractère alternatif du mouvement des essuie-glace induit dans tout le dispositif d'entraînement des changements de direction d'effort à chaque changement de direction du mouvement.

Ces efforts alternés se répercutent dans le dispositif d'entraînement jusqu'au réducteur et au moteur électrique. Il est apparu que, le moteur électrique étant en porte-à-faux, l'ensemble moteur-réducteur pouvait être animé de légers mouvements alternés autour de l'axe de l'arbre de sortie du réducteur. Ces oscillations, même de très faible amplitude, se révèlent néfastes à la durée de vie du système d'essuyage et sont par ailleurs génératrices de vibrations et de bruits indésirables.

On connaît par exemple dans le document US-A-3.874.249 un dispositif d'entraînement d'un système d'essuyage d'une vitre, notamment pour véhicule automobile, comportant un ensemble moteur-réducteur dans lequel le moteur agencé dans une. carcasse comporte un arbre moteur pour l'entraînement du réducteur et dans lequel le réducteur placé à l'avant du moteur comporte un arbre de sortie destiné à mouvoir une timonerie d'essuyage.

Le dispositif d'entraînement comporte en outre une platine de maintien de l'ensemble moteur-réducteur. La platine se prolonge à une première extrémité par une traverse, solidaire de la caisse du véhicule. Une pièce d'extrémité, solidaire de la caisse du véhicule, est fixée à la deuxième extrémité de la platine, par exemple par soudage.

La pièce d'extrémité a globalement la forme d'une plaque qui supporte la platine. La pièce d'extrémité assure donc la liaison entre la deuxième extrémité de la platine et la caisse du véhicule.

Cependant, la platine ne comporte pas de portion agencée à l'arrière de la carcasse du moteur pour former un appui arrière pour la carcasse.

L'état de la technique est également représenté par le document US-A-1.906.047. Cependant, dans ce document la platine comporte un coussinet servant d'appui non à la carcasse d'un moteur, mais à son arbre.

L'invention a donc pour objet de proposer une nouvelle conception d'un dispositif d'entraînement qui assure à la fois un meilleur maintien de l'ensemble moteur-réducteur sur la platine et qui permet d'isoler la platine de manière efficace contre les vibrations produites par l'ensemble moteur-réducteur.

Dans ce but l'invention propose un dispositif d'entraînement du type décrit précédemment et divulgué par exemple dans US-A-3 874 249, caractérisé en ce qu'il, comprend un élément d'appui lié à la traverse pour former un appui arrière pour la carcasse. On amortit ainsi les efforts et vibrations qui sont produits par l'entraînement de la timonerie et qui sont angulaires par rapport à l'arbre de sortie du réducteur.

Selon divers modes de réalisation de l'invention :
- l'élément d'appui est formé au moins en partie par une portion de la platine ;
- la carcasse du moteur comporte une excroissance axiale agencée à une extrémité arrière, et cette excroissance axiale est en appui sur la portion de la platine ;
- l'excroissance axiale arrière de la carcasse reçoit une extrémité arrière de l'arbre moteur ;
- la portion d'appui de la platine s'étend dans un plan sensiblement perpendiculaire à l'arbre moteur et elle comporte un logement dans lequel est reçue une zone de forme complémentaire de l'excroissance arrière de la carcasse du moteur ;
- un amortisseur annulaire est interposé entre le logement de la portion d'appui et la carcasse du moteur ;
- la platine comporte une patte, en forme de demi-anneau, qui entoure en partie la carcasse du moteur ;
- la patte est réalisée par emboutissage d'une partie de la platine ;
- la platine comporte une partie annulaire qui s'étend dans un plan perpendiculaire à l'arbre moteur et qui entoure l'arrière de la carcasse du moteur pour former un appui annulaire;
- un dispositif amortisseur est agencé entre la partie annulaire de la platine et la carcasse du moteur ;
- la platine comporte au moins un point de fixation sur la caisse du véhicule, et en ce qu'un dispositif amortisseur est interposé entre la platine et la caisse au niveau du point de fixation ;
- la traverse comporte un tronçon aplati, sur lequel est fixée une partie plane de la platine et en ce qu'un dispositif amortisseur est agencé entre la platine et la traverse au niveau des points de fixation ;
- l'élément d'appui est porté par une pièce rapportée montée sur la traverse ;
- la pièce rapportée comporte une première portion annulaire qui enserre la carcasse et une seconde portion annulaire qui enserre la traverse ;
- la première portion annulaire et la seconde portion annulaire sont réunies par une portion généralement plane ;
- la pièce rapportée est réalisée en deux parties qui forment chacune un demi-anneau de la première portion annulaire, une moitié de la portion généralement plane et un demi-anneau de la seconde portion annulaire ;
- les deux parties sont liées à une extrémité par une zone de liaison et à l'autre extrémité par un verrou.

D'autres caractéristiques et avantage de l'invention apparaîtront à la lecture de la description détaillée pour la compréhension de laquelle on se reportera aux dessins annexés parmi lesquels :
- la figure 1 est une vue en perspective de l'ensemble du dispositif d'entraînement conformément aux enseignements de l'invention ;
- la figure 2 est une vue en perspective plus générale du dispositif d'essuyage, selon un deuxième mode de réalisation de l'invention ;
- la figure 3 est une section du dispositif de la figure 2 au niveau de l'élément d'appui dans un plan perpendiculaire à l'axe du moteur ;
- la figure 4 est une section au niveau de l'élément d'appui dans un plan perpendiculaire à l'axe du moteur selon un troisième mode de réalisation de l'invention.

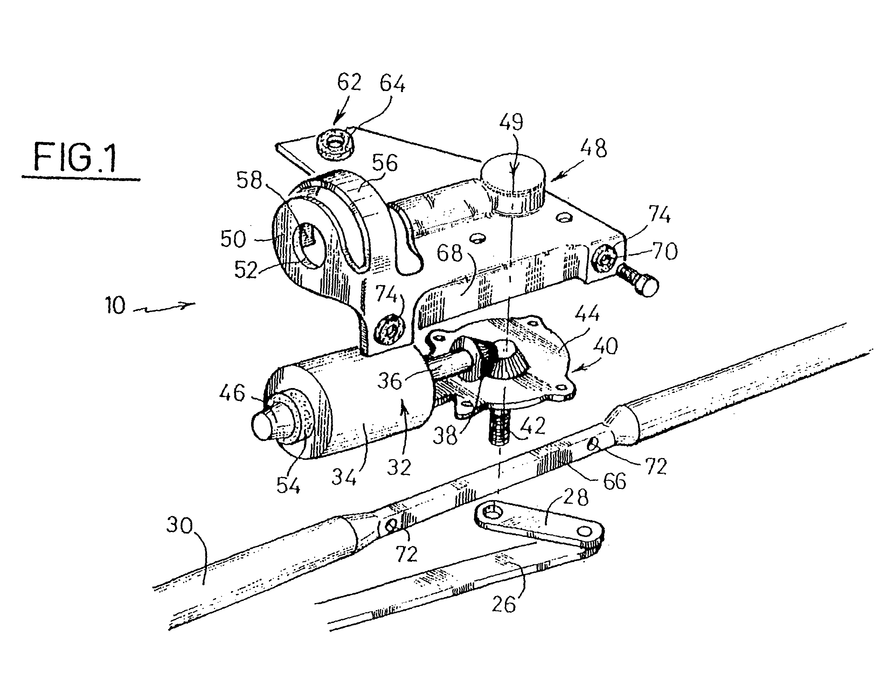

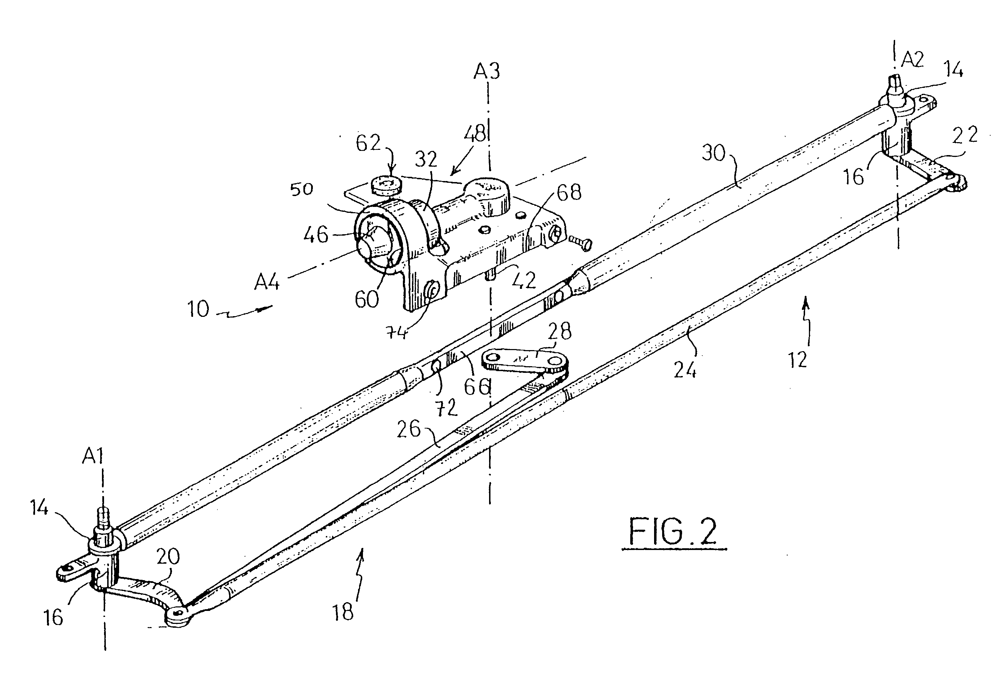

On a représenté sur les figures 1 et 2 deux variantes d'un dispositif d'entraînement 10 pour un système d'essuyage 12 d'une vitre de véhicule automobile, que l'on peut voir dans son ensemble sur la figure 2. Le dispositif d'entraînement 10 est destiné à provoquer le déplacement de deux essuie-glace (non représentés) montés en rotation respectivement autour de deux axes A1 et A2 sensiblement perpendiculaires à la vitre (non représentée).

Sur la figure 2, ces axes A1 et A2 sont représentés verticalement. Dans la suite de la description, les termes "horizontal" et "vertical" seront utilisés en référence à cette orientation.

De manière plus précise, les essuie-glace sont destinés à être montés à l'extrémité supérieure d'arbres d'entraînement 14 qui sont montés mobile en rotation dans des paliers 16 fixés à la caisse (non représentée) du véhicule.

Les arbres 14 sont entraînés en rotation alternée par le dispositif d'entraînement 10 par l'intermédiaire d'une timonerie 18. Cette timonerie 18 comporte des leviers 20 et 22, agencés sensiblement perpendiculairement aux axes A1 et A2, qui sont solidaires des arbres d'entraînement 14 et qui les entraînent en rotation. Ces leviers 20 et 22 sont reliés entre eux par une barre transversale 24 de liaison permettant de transmettre les mouvements des leviers 20, qui est entraîné directement, à l'autre levier 22.

Les mouvements du levier 20 sont provoqués par un ensemble comportant une bielle 26 de transmission de mouvement, dont une extrémité est fixée au levier 20, et une manivelle 28 qui est reliée à l'autre extrémité de la bielle 26. La manivelle 28 est articulée en rotation par le dispositif d'entraînement 10 autour d'un axe vertical A3.

De plus, les deux paliers 16 d'essuie-glace, qui sont fixés sur la caisse du véhicule, sont reliés par une traverse tubulaire 30 qui s'étend sensiblement perpendiculairement aux axes A1 et A2 des arbres d'entraînement 14. Chacune des extrémités de la traverse 30 peut par exemple être emmanchée sur un plot cylindrique du palier 16 correspondant.

Le dispositif d'entraînement 10 comporte un moteur électrique 32 agencé dans une carcasse 34. Le moteur 32 comporte un arbre moteur 36 agencé selon un axe A4 perpendiculaire à l'axe A3. Une extrémité avant 38 de l'arbre moteur 36 assure l'entraînement d'un renvoi d'angle à réduction de vitesse que l'on désignera par la suite sous le terme général de réducteur 40.

Le réducteur 40 pourra être réalisé différemment, notamment par l'utilisation conjointe d'une vis sans fin et de roues dentées, comme bien connue de l'homme du métier.

Le réducteur 40 est donc entraîné par l'arbre moteur 36, et entraîne en rotation un arbre de sortie 42 qui s'étend selon l'axe A3, et qui est solidaire en rotation de la manivelle 28 appartenant à la timonerie 18.

Le réducteur 40 est agencé à l'avant du moteur dans un carter de protection 44 qui entoure en partie le réducteur 40 et qui est fixé sur une extrémité avant de la carcasse 34 du moteur 32 de telle sorte que ces deux composants forment un ensemble moteur-réducteur compact.

Pour des raisons d'encombrement et de rigidité de l'arbre 36, la carcasse 34 du moteur 32 comporte souvent une excroissance axiale arrière 46, de forme générale cylindrique ou tronconique, qui reçoit, à l'intérieur de la carcasse 34, l'extrémité arrière (non représentée) de l'arbre moteur 36. Cette excroissance axiale 46 constitue en général un palier de l'arbre moteur 36.

Le dispositif d'entraînement 10 comporte une platine de maintien 48, qui est disposée par exemple dans une position sensiblement horizontale et perpendiculaire à l'axe A3, qui est fixée à la fois sur la caisse du véhicule et sur la traverse 30, et sur laquelle sont fixés le réducteur 40 et le moteur 32. Avantageusement, une partie sensiblement centrale 49 de la platine 48 fait office de plaque de fermeture pour le carter 44 du réducteur 40.

Lors du fonctionnement du dispositif d'entraînement, la manivelle 28 est déplacée en rotation par l'arbre de sortie 42. La manivelle 28 étant solidaire du reste de la timonerie 18, les efforts de résistance des essuie-glace et de la timonerie 18 sont retransmis à l'arbre de sortie 42, puis, par l'intermédiaire du réducteur 40, à l'arbre moteur 36.

Le fait que les mouvements des essuie-glace soient alternés provoque des à-coups réguliers qui sont retransmis jusqu'à l'arbre moteur 36 et jusqu'à l'ensemble du moteur 32. Les efforts ainsi retransmis sur l'arbre moteur sont angulaires autour de l'axe A3, du fait de l'agencement à angle droit des deux arbres 36 et 42.

Conformément aux enseignements de l'invention, et comme on peut le voir sur la figure 1, la platine de maintien 48 comporte une portion complémentaire 50, venue de matière avec la platine 48, et qui est agencée à l'arrière de la carcasse 34 du moteur 32. Cette portion constitue un élément d'appui pour former un appui supplémentaire pour la carcasse 34, ce qui a pour effet de renforcer le maintien du moteur 32. En particulier cette portion 50 permet de compenser les efforts sur l'arbre moteur 36 dus à la résistance de la timonerie 18.

La portion 50 s'étend dans un plan sensiblement perpendiculaire à l'axe A4 de l'arbre moteur 36 et elle comporte un trou 52 qui forme un logement dans lequel est enserrée l'excroissance axiale arrière 46 de la carcasse 34.

Afin d'éviter la transmission des vibrations qui sont issues à la fois du moteur lors de son fonctionnement et de l'entraînement de l'arbre de sortie 42 du réducteur, un amortisseur annulaire 54 est agencé entre le trou 52 de la portion 50 et l'excroissance axiale arrière 46 de la carcasse 34.

La platine 48 comporte aussi une patte 56 en forme de demi-anneau, qui est agencée de façon à entourer en partie l'extrémité arrière de la carcasse 32 du moteur. La patte 56 est réalisée par emboutissage d'une partie de la platine 48 proche de la portion d'appui 50. Cette patte 56 comporte une extrémité 58 libre, et elle sert à faciliter la dissipation des vibrations de la platine 48 et de l'ensemble du dispositif d'entraînement 10.

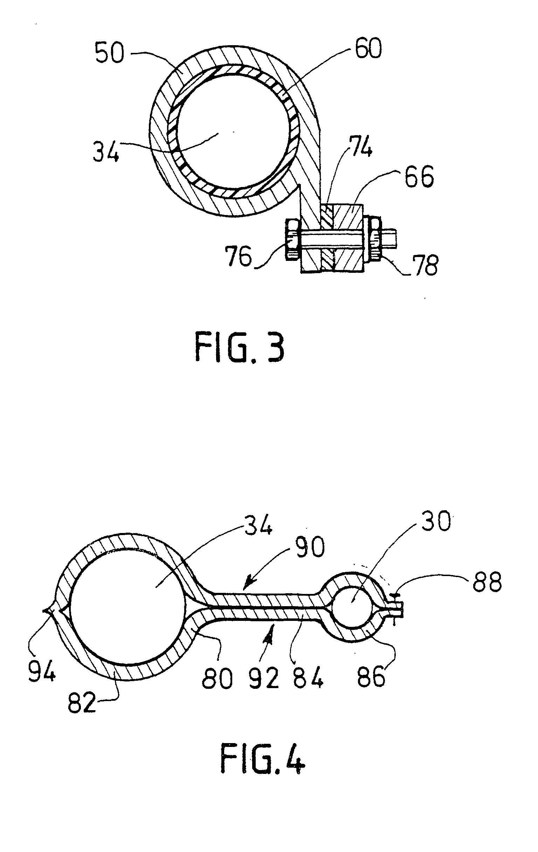

Selon un deuxième mode de réalisation, comme on peut le voir plus particulièrement sur les figures 2 et 3, la portion d'appui 50 de la platine 48 est de forme annulaire, et elle enserre la carcasse 34 du moteur 32 sur toute sa circonférence. La portion 50 est agencée sur une zone arrière de la carcasse 34 pour former un élément d'appui qui compense efficacement les efforts de résistance.

Afin de limiter le plus possible la transmission des vibrations, un amortisseur annulaire 60 est agencé entre la carcasse 34 et la portion d'appui annulaire 50.

Pour cela, la platine 48 comporte une partie 68, qui est sensiblement verticale et qui est pliée à angle droit par rapport au reste de la platine 48 et sur laquelle est fixée la platine 48. Dans ce but la traverse 30 comporte un tronçon central 66 qui est aplati. Ce tronçon 66 comporte deux trous 72, qui sont alignés avec des trous complémentaires 70 situés sur la partie verticale 68 de la platine 48 dans lesquels sont agencés des dispositifs amortisseurs annulaires 74.

De plus, la platine 48 comporte un trou 62, qui permet de fixer la platine 48 sur la caisse du véhicule. Pour éviter que les vibrations du dispositif d'entraînement 10 ne soient transmises à la caisse du véhicule, un amortisseur annulaire 64 est agencé dans le trou 62 et reçoit la vis de fixation.

Les différents dispositifs amortisseurs agencés d'une part entre la platine 48 et à la fois la traverse 30 et la caisse du véhicule, et d'autre part entre la platine 48 et le moteur 32 permettent d'améliorer le fonctionnement global du système d'essuyage en réduisant les vibrations et leurs transmission, et de diminuer avantageusement les bruits issus de ce système.

D'autres dispositifs amortisseurs peuvent être envisagés dans le cas pour lequel la platine 48 serait fixée à la traverse 30 de façon différente.

Selon un troisième mode de réalisation de l'invention représenté à la figure 4, une pièce rapportée 80 montée sur la traverse 30 forme l'élément d'appui 82.

La pièce rapportée 80 comporte une première portion annulaire 82 qui enserre la carcasse 34 du moteur 32 sur toute sa circonférence ainsi qu'une seconde portion annulaire 86 qui enserre la traverse 30 sur toute sa circonférence. On remarquera que dans le mode de réalisation représenté en figure 4 la traverse 30 n'est pas aplatie dans sa région de montage de la pièce rapportée 80.

La première portion annulaire 82 et la seconde portion annulaire 86 sont réunies par une portion généralement plane 84, dans un plan qui passe par l'axe du moteur 32 et par l'axe de la traverse 30.

Avantageusement, la pièce rapportée est réalisée en deux parties 90, 92 qui forment chacune un demi-anneau de la première portion annulaire 82, une moitié de la portion généralement plane 84 et un demi-anneau de la seconde portion annulaire 86.

Les deux parties 90, 92 sont liées à une extrémité par une zone de liaison 94 et retenues (de façon à enserrer la carcasse 34 et la traverse 30) à l'autre extrémité par un verrou 88.

On comprend que le montage de la pièce rapportée 80 sur le dispositif d'entraînement est très simple : il suffit d'amener la pièce rapportée 80 en position ouverte (verrou 88 non posé, parties 90 et 92 éloignées) par un mouvement perpendiculaire aux axes du moteur 32 et de la traverse 30. On referme ensuite la pièce rapportée 80 (parties 90 et 92 rapprochées) en enserrant par là même la carcasse 34 et la traverse 30. On immobilise enfin l'ensemble grâce au verrou 88.

La pièce rapportée 80 est par exemple réalisée en ULTRADUR 4300®.

La pièce rapportée 80 permet à la fois un maintien de la carcasse 34 et un amortissement des vibrations mentionnées précédemment.

Sans sortir du cadre de l'invention, l'excroissance axiale arrière 46 sur laquelle la portion 50 de la platine 48 est en appui, peut naturellement être une pièce rapportée, qui ne joue aucun rôle vis-à-vis de l'arbre moteur 36.

## Revendications

1. Dispositif d'entraînement (10) d'un système d'essuyage d'une vitre, notamment pour véhicule automobile, comportant un ensemble moteur-réducteur dans lequel le moteur (32) agencé dans une carcasse (34) comporte un arbre moteur (36) pour l'entraînement du réducteur (40) et dans lequel le réducteur (40) placé à l'avant du moteur comporte un arbre de sortie (42) destiné à mouvoir une timonerie d'essuyage (18), le dispositif comportant en outre une platine de maintien (48) de l'ensemble moteur-réducteur, qui est fixée sur une traverse (30) solidaire de la caisse du véhicule,
**caractérisé en ce qu'**il comprend un élément d'appui (50, 56, 82) lié à la traverse (30) pour former un appui arrière pour la carcasse (34).

2. Dispositif d'entraînement (10) selon la revendication 1, **caractérisé en ce que** l'élément d'appui est formé au moins en partie par une portion (50, 56) de la platine (48).

3. Dispositif d'entraînement (10) selon la revendication 2, **caractérisé en ce que** la carcasse (34) du moteur (32) comporte une excroissance axiale (46) agencée à une extrémité arrière, et **en ce que** cette excroissance axiale (46) est en appui sur la portion (50) de la platine (48).

4. Dispositif d'entraînement (10) selon la revendication 3, **caractérisé en ce que** l'excroissance axiale arrière (46) de la carcasse (34) reçoit une extrémité arrière de l'arbre moteur (36).

5. Dispositif d'entraînement (10) selon l'une quelconque des revendications 3 ou 4, **caractérisé en ce que** la portion d'appui (50) de la platine (48) s'étend dans un plan sensiblement perpendiculaire à l'arbre moteur (36) et **en ce qu'**elle comporte un logement (52) dans lequel est reçue une zone de forme complémentaire de l'excroissance arrière (46) de la carcasse (34) du moteur (32).

6. Dispositif d'entraînement (10) selon la revendication 5, **caractérisé en ce qu'**un amortisseur annulaire (54) est interposé entre le logement (52) de la portion d'appui (50) et la carcasse (34) du moteur (32).

7. Dispositif d'entraînement (10) selon l'une quelconque des revendications 2 à 5, **caractérisé en ce que** la platine (48) comporte une patte (56), en forme de demi-anneau, qui entoure en partie la carcasse (34) du moteur (32).

8. Dispositif d'entraînement (10) selon la revendication 7, **caractérisé en ce que** la patte (56) est réalisée par emboutissage d'une partie de la platine (48).

9. Dispositif d'entraînement (10) selon la revendication 2, **caractérisé en ce que** la platine (48) comporte une partie annulaire (50) qui s'étend dans un plan perpendiculaire à l'arbre moteur (36) et qui entoure l'arrière de la carcasse (34) du moteur (32) pour former un appui annulaire.

10. Dispositif d'entraînement (10) selon la revendication 9, **caractérisé en ce qu'**un dispositif amortisseur (60) est agencé entre la partie annulaire (50) de la platine (48) et la carcasse (34) du moteur (32).

11. Dispositif d'entraînement (10) selon l'une des revendications 2 à 10, **caractérisé en ce que** la traverse (30) comporte un tronçon aplati (66), sur lequel est fixée une partie plane (68) de la platine (48) et **en ce qu'**un dispositif amortisseur (74) est agencé entre la platine (48) et la traverse (30) au niveau des points de fixation (70).

12. Dispositif d'entraînement (10) selon la revendication 1, **caractérisé en ce que** l'élément d'appui (82) est porté par une pièce rapportée (80) montée sur la traverse (30).

13. Dispositif d'entraînement (10) selon la revendication 12, **caractérisé en ce que** la pièce rapportée (80) comporte une première portion annulaire (82) qui enserre la carcasse (34) et une seconde portion annulaire (86) qui enserre la traverse (30).

14. Dispositif d'entraînement (10) selon la revendication 13, **caractérisé en ce que** la première portion annulaire (82) et la seconde portion annulaire (86) sont réunies par une portion généralement plane (84).

15. Dispositif d'entraînement (10) selon la revendication 14, **caractérisé en ce que** la pièce rapportée (80) est réalisée en deux parties (90, 92) qui forment chacune un demi-anneau de la première portion annulaire (82), une moitié de la portion généralement plane (84) et un demi-anneau de la seconde portion annulaire (86).

16. Dispositif d'entraînement (10) selon la revendication 15, **caractérisé en ce que** les deux parties (90, 92) sont liées à une extrémité par une zone de liaison (94) et à l'autre extrémité par un verrou (88).

17. Dispositif d'entraînement (10) selon l'une quelconque des revendications précédentes, **caractérisé en ce que** la platine (48) comporte au moins un point de fixation (62) sur la caisse du véhicule, et **en ce qu'**un dispositif amortisseur (64) est interposé entre la platine (48) et la caisse au niveau du point de fixation.

## Patentansprüche

1. Antriebsvorrichtung (10) eines Scheibenwischersystems, insbesondere für Kraftfahrzeuge, mit einer Getriebemotoreinheit, in der der in einem Rahmen (34) angeordnete Motor (32) eine Motorwelle (36) für die Antrieb des Getriebes (40) umfasst und in der das vor dem Motor angeordnete Getriebe (40) eine Ausgangswelle (42) umfasst, die ein Wischgestänge (18) betätigen soll, wobei die Vorrichtung ferner eine Halteplatine (48) der Getriebemotoreinheit umfasst, die an einem Querbalken (30) des Fahrzeugskastens befestigt ist, **dadurch gekennzeichnet, dass** sie ein mit dem Querbalken (30) verbu ndenes Stützelement (50, 56, 82) umfasst, um eine hintere Stütze für den Rahmen (34) zu bilden.

2. Antriebsvorrichtung (10) nach Anspruch 1, **dadurch gekennzeichnet, dass** das Stützelement zumindest teilweise durch einen Abschnitt (50, 56) der Platine (48) gebildet wird.

3. Antriebsvorrichtung (10) nach Anspruch 2, **dadurch gekennzeichnet, dass** der Rahmen (34) des Motors (32) eine an einem hinteren Ende vorgesehene axiale Ausstülpung (46) aufweist, und dass sich diese axiale Ausstülpung (46) auf den Abschnitt (50) der Platine (48) abstützt.

4. Antriebsvorrichtung (10) nach Anspruch 3, **dadurch gekennzeichnet, dass** die hintere axiale Ausstülpung (46) des Rahmens (34) ein hinteres Ende der Motorwelle (36) aufnimmt.

5. Antriebsvorrichtung (10) nach einem der An sprüche 3 oder 4, **dadurch gekennzeichnet, dass** sich der Stützabschnitt (50) der Platine (48) in einer etwa lotrecht zur Motorwelle (36) verlaufenden Ebene erstreckt, und dass er eine Aufnahme (52) umfasst , in der eine Zone komplementärer Form der hinteren Ausstülpung (46) des Rahmens (34) des Motors (32) gelagert ist.

6. Antriebsvorrichtung (10) nach Anspruch 5, **dadurch gekennzeichnet, dass** zwischen der Aufnahme (52) des Stützabschnitts (50) und dem Rahmen (34) des Motors (32) ein ringförmiger Dämpfer (54) eingefügt ist.

7. Antriebsvorrichtung (10) nach einem der Ansprüche 2 bis 5, **dadurch gekennzeichnet, dass** die Platine (48) eine halbringförmige Lasche (56) umfasst, die den Rahmen (34) des Motors (32) teilweise umgibt.

8. Antriebsvorrichtung (10) nach A nspruch 2, **dadurch gekennzeichnet, dass** die Lasche (56) durch Tiefziehen eines Teils der Platine (48) hergestellt wird.

9. Antriebs vorrichtung (10) nach Anspruch 2 , **dadurch gekennzeichnet, dass** die Platine (48) ein ringförmiges Teil (50) umfasst, das sich in einer lotrecht zur Motorwelle (36) verlaufenden Ebene erstreckt und die Rückseite des Rahmens (34) des Motors (32) umgibt, um ei ne ringförmige Stütze zu bilden.

10. Antriebsvorrichtung (10) nach Anspruch 9, **dadurch gekennzeichnet, dass** zwischen dem ringförmigen Teil (50) der Platine (48) und dem Rahmen (34) des Motors (32) eine Dämpfvorrichtung (60) vorgesehen ist.

11. Antriebsvorrichtung (10) nach einem der Ansprüche 2 bis 10, **dadurch gekennzeichnet, dass** der Querbalken (30) einen abgeflachten Abschn itt (66) umfasst , an dem ein flächiger Teil (68) der Platine (48) befestigt ist, und dass zwischen der Platine (48) und dem Querbalken (30), in Höhe der Befestigungspunkte (70) , eine Dämpfvorrichtung (74) eingefügt ist.

12. Antriebsvorrichtung (10) nach A nspruch 1, **dadurch gekennzeichnet, dass** das Stützelement (82) von einem am Querbalken (30) montierten Ansatzstück (80) getragen wird.

13. Antriebsvorrichtung (10) nach Anspruch 12, **dadurch gekennzeichnet, dass** das Ansatzstück (80) einen ersten ringförmigen Abschnitt (82) umfasst , der den Rahmen (34) umgibt, und einen zweiten ringförmigen Abschnitt (86), der den Querbalken (30) umgibt.

14. Antriebsvorrichtung (10) nach Anspruch 13, **dadurch gekennzeichnet, dass** der erste ringförmige Abschnitt (82) und der z weite ringförmige Abschnitt (86) über einen im Allgemeinen flächigen Abschnitt (84) verbunden sind.

15. Antriebsvorrichtung (10) nach Anspruch 14, **dadurch gekennzeichnet, dass** das Ansatzstück (80) aus zwei Teilen (90, 92) besteht , die jeweils einen Halbri ng des ersten ringförmigen Abschnitts (82), eine Hälfte des im Allgemeinen flächigen Abschnitts (84) und einen Halbring des zweiten ringförmigen Abschnitts (86) bilden.

16. Antriebsvorrichtung (10) nach Anspruch 15, **dadurch gekennzeichnet, dass** die beiden Teile (90, 92) an einem Ende über eine Verbindungszone (94) und am anderen Ende über einen Riegel (88) verbunden sind.

17. Antriebsvorrichtung (10) nach einem der vorherigen Ansprüche, **dadurch gekennzeichnet, dass** die Platine (48) mindestens einen Befest igungspunkt (62) am Fahrzeugkasten umfasst, und dass zwischen der Platine (48) und dem Kasten, in Höhe des Befestigungspunkts, eine Dämpfvorrichtung (64) eingefügt ist.

## Claims

1. A drive device (10) for a window wiping system, in particular for a motor vehicle, comprising a motor/reduction gear assembly in which the motor (32) arranged in a frame (34) has a motor shaft (36) for driving the reduction gear (40) and in which the reduction gear (40) placed at-the front of the motor has an output shaft (42) intended to move a wiping linkage (18), the device also having a support plate (48) for the motor/reduction gear assembly, which is fixed on a cross-member (30) immovably attached to the body of the vehicle,
**characterised in that** it comprises a bracing element (50, 56, 82) connected to the cross-member (30) in order to form a rear brace for the frame (34).

2. A drive device (10) according to Claim 1, **characterised in that** the bracing element is formed at least partly by a portion (50, 56) of the plate (48).

3. A drive device (10) according to Claim 2, **characterised in that** the frame (34) of the motor (32) has an axial protuberance (46) arranged at a rear end, and **in that** this axial protuberance (46) is braced on the portion (50) of the plate (48).

4. A drive device (10) according to Claim 3, **characterised in that** the rear axial protuberance (46) of the frame (34) receives a rear end of the motor shaft (36).

5. A drive device (10) according to either one of Claims 3 or 4, **characterised in that** the bracing portion (50) of the plate (48) extends in a plane substantially perpendicular to the motor shaft (36), and **in that** it has a housing (52) in which there is received an area of complementary form of the rear protuberance (46) of the frame (34) of the motor (32).

6. A drive device (10) according to Claim 5, **characterised in that** an annular damper (54) is interposed between the housing (52) of the bracing portion (50) and the frame (34) of the motor (32).

7. A drive device (10) according to any one of Claims 2 to 5, **characterised in that** the plate (48) has a lug (56), in the shape of a half-ring, which partly surrounds the frame (34) of the motor (32).

8. A drive device (10) according to Claim 7, **characterised in that** the lug (56) is produced by stamping part of the plate (48).

9. A drive device (10) according to Claim 2, **characterised in that** the plate (48) has an annular part (50) which extends in a plane perpendicular to the motor shaft (36) and which surrounds the rear of the frame (34) of the motor (32) in order to form an annular brace.

10. A drive device (10) according to Claim 9, **characterised in that** a damping device (60) is arranged between the annular part (50) of the plate (48) and the frame (34) of the motor (32).

11. A drive device (10) according to one of Claims 2 to 10, **characterised in that** the cross-member (30) has a flattened section (66), on which a flat part (68) of the plate (48) is fixed, and **in that** a damping device (74) is arranged between the plate (48) and the cross-member (30) at the fixing points (70).

12. A drive device (10) according to Claim 1, **characterised in that** the bracing element (82) is carried by an added-on piece (80) mounted on the cross-member (30).

13. A drive device (10) according to Claim 12, **characterised in that** the added-on piece (80) has a first annular portion (82) which grips the frame (34) and a second annular portion (86) which grips the cross-member (30).

14. A drive device (10) according to Claim 13, **characterised in that** the first annular portion (82) and the second annular portion (86) are joined together by a generally flat portion (84).

15. A drive device (10) according to Claim 14, **characterised in that** the added-on piece (80) is produced in two parts (90, 92) which each form a half-ring of the first annular portion (82), half of the generally flat portion (84) and a half-ring of the second annular portion (86).

16. A drive device (10) according to Claim 15, **characterised in that** the two parts (90, 92) are connected at one end by a connecting area (94) and at the other end by a bolt (88).

17. A drive device (10) according to any one of the preceding claims, **characterised in that** the plate (48) has at least one point of fixing (62) on the body of the vehicle, and **in that** a damping device (64) is interposed between the plate (48) and the body at the fixing point.
